# EUROPÄISCHE PATENTSCHRIFT

(11) **EP 1 876 469 B1**
(45) Veröffentlichungstag und Bekanntmachung des Hinweises auf die Patenterteilung: **25.11.2009**
(21) Anmeldenummer: 06013854.2
(22) Anmeldetag: 04.07.2006
(51) Int. Cl.: G01S 7/497, G01S 17/10, G01S 7/486

(54) **Verfahren und Vorrichtung zur optoelektronischen berührungslosen Distanzmessung nach dem Laufzeitprinzip**
Method and apparatus for optoelectronic contactless distance measuring according to the time of fly principle
Procédé et dispositif destinés à la mesure de distance optoélectronique sans contact selon le principe de durée

(43) Veröffentlichungstag der Anmeldung: 09.01.2008
(73) Patentinhaber: Pepperl + Fuchs GmbH, 68307 Mannheim (DE)
(72) Erfinder: Satzky, Uwe, 22455 Hamburg (DE); Tabel, Ernst, 22337 Hamburg (DE)
(74) Vertreter: Schiffer, Axel Martin

(56) Entgegenhaltungen:
- CH-A- 631 860
- CH-A- 641 308
- DE-A1- 19 703 633
- DE-A1- 19 704 340
- DE-C1- 19 830 684
- US-A1- 2005 119 846

## Beschreibung

Die vorliegende Erfindung betrifft in einem ersten Aspekt ein Verfahren zur optoelektronischen berührungslosen Distanzmessung nach dem Laufzeitprinzip nach dem Oberbegriff des Anspruchs 1.

In einem zweiten Aspekt bezieht sich die Erfindung auf eine Vorrichtung zur optoelektronischen berührungslosen Distanzmessung nach dem Laufzeitprinzip nach dem Oberbegriff des Anspruchs 13.

Optoelektronische Sensoren zur berührungslosen Distanzmessung werden je nach genutztem Verfahren in verschiedene Kategorien eingeteilt.

Eine erste Möglichkeit, Entfernungen sehr präzise zu messen, besteht darin, die Phasenlage von ausgesandter und empfangener Welle zu messen. Bei diesem Verfahren werden von einer Laserdiode Sinuswellen ausgesendet. Durch den Vergleich der Phasenlage der ausgesendeten Welle mit der Phasenlage der empfangenen Welle kann die Entfernung bestimmt werden.

Im Unterschied dazu werden bei Pulslaufzeitverfahren von einer Lichtquelle kurze Pulse ausgesendet. Durch die Messung der Laufzeit zwischen dem Aussenden des Pulses und dem Nachweis des reflektierten Lichts kann die Entfernung des reflektierenden Objekts bestimmt werden. Auf dieses Verfahren bezieht sich die vorliegende Erfindung.

Bei einem gattungsgemäßen Verfahren wird eine Entfernung eines Objekts von einer Sensoreinheit bestimmt aus einer Zeitdifferenz zwischen einem Startsignal und einem Echosignal, das aus einem von dem Objekt reflektierten optischen Messpuls abgeleitet wird. Zur Bestimmung der Zeitdifferenz werden folgende Schritte durchgeführt: a) Durch Vergleich von Startsignal und Echosignal mit einer digitalen Clock wird ein digitaler Rohwert gewonnen; b) mit Hilfe von mindestens zwei Feininterpolatoren werden eine Anfangszeitdifferenz zwischen Startsignal und Beginn des digitalen Rohwerts sowie eine Endzeitdifferenz zwischen Echosignal und Ende des digitalen Rohwerts bestimmt; c) den Feininterpolatoren werden jeweils der Anfangsdifferenz beziehungsweise der Endzeitdifferenz entsprechende analoge Signale zugeführt und zu einer digitalen Anfangszeitdifferenz beziehungsweise digitalen Endzeitdifferenz umgesetzt.

Eine gattungsgemäße Vorrichtung weist eine Sensoreinheit mit mindestens einer Lichtquelle zum Aussenden von Lichtpulsen und einem Detektor zum Nachweis von Lichtpulsen auf, wobei eine Entfernung eines Objekts von der Sensoreinheit bestimmbar ist aus einer Zeitdifferenz zwischen einem Startsignal und einem Echosignal, das aus einem von dem Objekt reflektierten optischen Messpuls abgeleitet ist. Weiterhin beinhaltet eine gattungsgemäße Vorrichtung eine Zeitmesseinheit zum Bestimmen der Zeitdifferenz, die folgende Komponenten aufweist: Eine digitale Clock zum Bestimmen eines digitalen Rohwerts aus Startsignal und Echosignal, mindestens zwei Feininterpolatoren zum Bestimmen einer Anfangszeitdifferenz zwischen Startsignal und Beginn des digitalen Rohwerts und einer Endzeitdifferenz zwischen Echosignals und Ende des digitalen Rohwerts durch Umsetzen von der Anfangszeitdifferenz beziehungsweise der Endzeitdifferenz entsprechenden analogen Signalen zu einer digitalen Anfangszeitdifferenz beziehungsweise digitalen Endzeitdifferenz.

Verfahren und Vorrichtungen dieser Art werden beispielsweise in der Lager- und Fördertechnik zur Positionierung von Regalbediengeräten aber auch bei einer Vielzahl weiterer Anwendungen im Bereich der industriellen Automatisierung eingesetzt.

Ein Verfahren und eine Vorrichtung zur hier eingesetzten hoch auflösenden Zeitmessung sind in CH 631 860 G beschrieben.

Eine allgemeine Problemstellung bei dem Einsatz von Feininterpolatoren besteht darin, dass die zur Umsetzung der analogen Signale in Digitalwerte notwendigen Komponenten grundsätzlich immer Nichtlinearitäten aufweisen und darüber hinaus Driften, beispielsweise Temperatur- und Alterungsdriften, unterworfen sind. Diese Mechanismen wirken sich unmittelbar auf die für das Endergebnis erzielte Messgenauigkeit aus. Je höher die Genauigkeitsanforderung an solche Komponenten ist, umso höher sind auch im Allgemeinen die Kosten für diese Bauteile.

DE 198 30 684 C1 betrifft eine optoelektronische Vorrichtung zur Ermittlung der Distanz von Gegenständen mittels des Impulslaufzeitverfahrens. Der Grundgedanke besteht dabei darin, für jeden einer Mehrzahl von N-Sendelichtimpulsen durch Auswertung der aus dem entsprechenden Empfangssignal gewonnenen Folge von diskreten Abtastwerten in der Steuereinheit die Laufzeit des Sendelichtimpulses zu ermitteln und daraus einen Abstandswert zu berechnen. Dabei wird jeweils aus den aus einem Empfangssignal gewonnenen Abtastwerten der Maximalwert der Amplitude des Empfangssignals bestimmt. Die zeitliche Verzögerung dieses Maximalwerts gegenüber dem Sendelichtimpuls ergibt dann die Laufzeit des Sendelichtimpulses und somit die Entfernung.

US 2005/0119846 A1 bezieht sich auf eine Kalibrierungsmethode von zeitmessgeräten. Dort wird eine statistische Methode zur Kalibrierung von Feininterpolatoren verwendet, die auf separat und künstlich hierfür erzeugten Pulsen beruht.

DE 197 04 340 A1 betrifft ebenfalls einen Entfernungsmesser nach dem Lichtlaufzeitprinzip, wobei aber eine Kalibrierung von Feininterpolatoren dort nicht beschrieben ist.

DE 197 03 633 A1 bezieht sich auf ein Messverfahren zur Bestimmung eines Zeitintervalls zwischen zwei Ereignissen, bei dem Feininterpolatoren eingesetzt werden.

**Aufgabe** der vorliegenden Erfindung ist es, ein Verfahren und eine Vorrichtung der oben bezeichneten Art zu schaffen, mit welcher die Messgenauigkeit erhöht werden kann.

Diese Aufgabe wird durch das verfahren mit den Merkmalen des Anspruchs 1 und durch die Vorrichtung mit den Merkmalen des Anspruchs 13 gelöst.

Bevorzugte Varianten des erfindungsgemäßen Verfahrens und vorteilhafte Ausführungsbeispiele der erfindungsgemäßen Vorrichtung sind Gegenstand der abhängigen Ansprüche.

Das Verfahren der oben angegebenen Art ist erfindungsgemäß dadurch weitergebildet, dass zur automatischen Kalibrierung der Feininterpolatoren eine Vielzahl von Messungen nach den Schritten a) bis c) durchgeführt wird und dass unter Annahme einer Gleichverteilung für die Wahrscheinlichkeit, mit der Werte in einem bestimmten Werteintervall für die Anfangszeitdifferenz und die Endzeitdifferenz gemessen werden, Korrekturen für Nichtlinearitäten und/oder Driften der Kennlinien der Feininterpolatoren errechnet werden.

Die Vorrichtung der oben angegebenen Art ist erfindungsgemäß dadurch weitergebildet, dass zur automatischen Kalibrierung der Feininterpolatoren eine Recheneinheit vorhanden ist, welche auf Grundlage einer Vielzahl von Zeitdifferenzmessungen eine statistische Auswertung vornimmt und unter Annahme einer Gleichverteilung für die Wahrscheinlichkeiten, mit der Werte in einem bestimmten Werteintervall für die Anfangszeitdifferenz und die Endzeitdifferenz gemessen werden, Korrekturen für Nichtlinearitäten und/oder Driften der Feininterpolatoren errechnet.

Die erfindungsgemäße Vorrichtung eignet sich insbesondere zur Durchführung des erfindungsgemäßen Verfahrens.

Als erster der Erfindung zugrunde liegende Kerngedanke kann die Erkenntnis angesehen werden, dass aus einer bestimmten Wahrscheinlichkeit, mit der bestimmte Werte für die Anfangszeitdifferenz beziehungsweise die Endzeitdifferenz auftreten, nämlich einer gleichen Wahrscheinlichkeit über ein bestimmtes Werteintervall, und aus einer Messung der Häufigkeiten, mit der die entsprechenden Feininterpolatorwerte auftreten, im Prinzip geschlossen werden kann auf die Kennlinie, mit welcher die fragliche Umsetzung im jeweiligen Feininterpolator erfolgt.

Als zweiter Kerngedanke der Erfindung ist anzusehen, zur automatischen Kalibrierung der Feininterpolatoren eine Vielzahl von Messungen auszuführen und die gemessenen Feininterpolatorwerte statistisch auszuwerten und unter Annahme einer Verteilung für die Wahrscheinlichkeit, mit der die einzelnen Werte für die Anfangszeitdifferenz beziehungsweise die Endzeitdifferenz gemessen werden, die jeweiligen korrigierten Feininterpolatorwerte zu errechnen.

Ein erster wesentlicher Vorteil des erfindungsgemäßen Verfahrens ist, dass prinzipiell beliebige Driften und Nichtlinearitäten der Feininterpolatoren korrigiert werden können. Die Kennlinie braucht im Grundsatz nur monoton zu sein.

Ein weiterer, für die Praxis sehr bedeutsamer Vorteil ist, dass an die Feininterpolatoren nur noch eine geringe Anforderung im Hinblick auf Linearität und Driftverhalten zu stellen ist, da die entsprechenden Korrekturen durch das erfindungsgemäße Verfahren sehr präzise vorgenommen werden können. Insbesondere dieser Aspekt gestattet erhebliche Kosteneinsparungen.

Bei dem erfindungsgemäßen Verfahren werden die Korrekturen der Feininterpolatoren unter der Annahme errechnet, dass innerhalb eines bestimmten Werteintervalls alle Anfangszeitdifferenzen und Endzeitdifferenzen mit derselben Wahrscheinlichkeit gemessen werden. Diese Situation ist realisiert, wenn das zu messende Zeitintervall relativ zu der digitalen Clock keine Phasenkorrelation aufweist.

Eine Korrektur der Feininterpolatorwerte kann dann in einfacher Weise dadurch erhalten werden, dass eine Summe der Häufigkeiten, mit der einzelne Feininterpolatorwerte auftreten, gebildet wird, und dass korrigierte Feininterpolatorwerte gewonnen werden, indem die Summe durch eine Konstante dividiert wird und von dem erhaltenen Wert nur die Ganzen berücksichtigt werden.

Diese Division kann rechentechnisch besonders rasch bewerkstelligt werden, wenn als Konstante eine Potenz von 2 gewählt und zur Division die entsprechende Zahl von "Least significant Bits" weggestrichen wird.

Um Schwierigkeiten mit sehr kurzen Pulsen und sehr kleinen Signalen zu vermeiden, ist es vorteilhaft, wenn zur Bestimmung des digitalen Rohwerts erst ab einer zweiten, auf ein auslösendes Ereignis folgenden Flanke der Clock gezählt wird. Ein auslösendes Ereignis kann beispielsweise eine ansteigende oder eine abfallende Flanke eines Startsignals oder eines Echosignals sein.

Eine weitere grundsätzliche Aufgabenstellung im Zusammenhang mit Laufzeitmessungen der hier beschriebenen Art besteht darin, dass bei einem Startsignal oder einem Echosignal klar sein muss, welcher Zeitpunkt genau diesem Signal zugeordnet wird. Zweckmäßig wird man davon ausgehen, dass dieser Zeitpunkt in der Mitte zwischen einer ansteigenden und einer abfallenden Flanke dieser Signale liegt. Damit die ansteigenden und abfallenden Flanken jeweils berücksichtigt werden können, werden insgesamt vier Feininterpolatoren eingesetzt, beziehungsweise weist die erfindungsgemäße Vorrichtung insgesamt vier Feininterpolatoren auf.

Die Feininterpolatoren weisen zweckmäßig jeweils einen Time-Analog-Converter, TAC, sowie einen Analog-Digital-Converter, ADC, auf.

Ein wesentlicher Vorteil der erfindungsgemäßen Vorrichtung besteht darin, dass im Hinblick auf diese Komponenten keine hohe Genauigkeitsanforderung mehr gestellt ist, so dass beispielsweise der TAC ein RC-Glied sein kann.

Das Startsignal für die Zeitmessung kann dabei grundsätzlich optisch aus den von einer Lichtquelle ausgesandten Lichtpulsen ausgekoppelt und abgeleitet werden. Besonders bevorzugt wird das Startsignal aber aus einer Steuerelektronik der Lichtquelle abgeleitet. Ein solcher Aufbau kann mit kostengünstigeren Komponenten verwirklicht werden.

Die Elektronik, durch welche das Startsignal geleitet und schließlich der Zeitmesseinrichtung zugeführt wird, kann ebenfalls Driften, beispielsweise Temperatur- oder Alterungsdriften, aufweisen, die sich negativ auf die Messgenauigkeit auswirken. Um solche Driften eliminieren zu können, ist verfahrensmäßig weiterhin bevorzugt, wenn eine Referenzentfernung gemessen wird, indem Referenzpulse über eine optische Referenzstrecke geleitet werden.

Um zu vermeiden, dass durch einen zweiten optischen Detektionskanal, also einen zweiten optischen Detektor, eine weitere Driftquelle in das Messsystem eingeführt wird, schlägt die Erfindung in einem weiteren wesentlichen Aspekt vor, die Referenzpulse mit demselben Detektor wie die Echopulse nachzuweisen. Hierzu muss, damit sich die Referenzpulse und die Echopulse nicht zeitlich überlappen, der optische Weg der Referenzpulse unterschiedlich, beispielsweise deutlich kürzer als der kürzeste optische Weg der Echopulse gewählt werden.

In vorrichtungsmäßiger Hinsicht ist dann zweckmäßig, wenn eine Einrichtung zum Aufteilen der Lichtpulse in jeweils einen Messpuls und einen Referenzpuls, eine Messoptik zum Leiten der Messpulse auf das Objekt und zum Leiten der von dem Objekt reflektierten Messpulse als Echopulse auf den Detektor und eine Referenzoptik zum Leiten der Referenzpulse in Richtung des Detektors vorhanden sind, wobei der optische Weg der Referenzpulse um mindestens eine Offsetstrecke kürzer oder länger ist als der optische Weg der Messpulse und wobei der Detektor zum abwechselnden quantitativen Nachweis sowohl der Echopulse als auch der Referenzpulse dient.

In die endgültige Bestimmung des Entfernungswerts geht bei dieser Verfahrensvariante eine Differenz zwischen der mit Hilfe der Echopulse gemessenen Entfernung und der Referenzentfernung ein. Diese Differenz kann besonders genau bestimmt werden, wenn die Referenzpulse und die Echopulse in etwa dieselbe Höhe aufweisen. Vorteilhafterweise ist deshalb im Strahlengang der Echopulse ein steuerbarer Pulsabschwächer angeordnet, zum gezielten Abschwächen der Echopulse, so dass diese mit den Referenzpulsen größenmäßig vergleichbar sind.

Ein erster Grundgedanke dieser Variante kann darin gesehen werden, dass zum Nachweis der Echopulse und der Referenzpulse ein und derselbe Detektor verwendet wird. Sowohl die Referenzmessung als auch die eigentliche Entfernungsmessung erfolgen deshalb stets mit denselben Komponenten, so dass ein möglicher Fehler über Bauteiletoleranzen ausgeschlossen und dementsprechend eine erheblich verbesserte Messgenauigkeit erzielt werden kann. Die Messung von Referenz und Entfernung kann deshalb nicht gleichzeitig, sondern muss alternierend erfolgen. Unter einem abwechselnden oder alternierenden Messen soll im vorliegenden Zusammenhang im Wesentlichen ein Nacheinandermessen von Echopulsen und Referenzpulsen verstanden werden. Die Erfindung umfasst insbesondere auch typische Situationen, wo beispielsweise 100 Echopulse gemessen werden und anschließend ein Referenzpuls gemessen wird. Wesentlich ist, dass die Messung von Echo- und Referenzpulsen nicht gleichzeitig in demselben Detektor erfolgen kann.

Ein weiterer Grundgedanke dieser Variante besteht darin, dass der optische Weg der Referenzpulse um mindestens eine Offsetstrecke kürzer oder länger ist als der optische Weg der Messpulse. Auf diese Weise ist es möglich, Referenzpulse und Echopulse so weit zeitlich zu trennen, dass sie einander beim Nachweis im Detektor nicht überlagern und demgemäß eine getrennte Pulserfassung möglich ist und eine Referenzentfernung bestimmt werden kann.

Ein dritter Grundgedanke ist schließlich darin zu sehen, dass im Strahlengang der Echopulse ein Pulsabschwächer angeordnet ist, mit welchem die Echopulse gezielt und gesteuert abgeschwächt werden, so dass sie mit den Referenzpulsen größenmä-ßig vergleichbar sind. Durch die etwa gleiche Höhe der Referenz- und der Echopulse wird die Genauigkeit der Zeitbestimmung, welche die Ableitung eines Zeitpunkts aus einem Puls mit zunächst beliebigem Zeitverhalten voraussetzt, weiter erhöht. Durch die Messung von Echopulsen und Referenzpulsen mit absolut denselben Bauteilen, werden alle möglichen Ursachen für Driften in die Messung beider Entfernungen einbezogen. Durch Bildung einer Differenz zwischen der Strecke Startpuls/Referenzsignal und der Strecke Startpuls/Echosignal wird eine sogenannte Differenzdistanz gebildet. Eine eventuell auftretende Drift wird durch diese Differenzbildung rechnerisch eliminiert.

Diese Variante des erfindungsgemäßen Verfahrens zeichnet sich somit dadurch aus, dass alle Messungen von Referenzpulsen und Echopulsen mit denselben Bauteilen erfolgen, mithin nur ein optischer Empfänger sowohl für die Referenz- als auch für die Echomessung benutzt wird. Weiterhin ist eine optische Weglänge für die interne Referenz kürzer, als eine optische Weglänge für die eigentliche Entfernungsmessung. Wesentlich für die Erfindung ist außerdem, dass für die Signalstärke der Echosignale mit Hilfe eines steuerbaren Pulsabschwächers auf den entsprechenden Wert des Referenzsignals geregelt wird.

Unter der größenmäßigen Vergleichbarkeit kann beispielsweise eine pegelmäßige oder auch eine flächenmäßige Vergleichbarkeit der Pulse verstanden werden.

Bei der Lichtquelle kann es sich grundsätzlich um eine beliebige Lichtquelle handeln, die in der Lage ist, hinreichend kurze Pulse zu liefern. Bevorzugt werden Laser mit sichtbarem Licht oder Infrarotlicht verwendet. Auch der Einsatz von VCSELs oder RCLEDs ist möglich.

Als Detektoren können beispielsweise bekannte Photodioden verwendet werden.

Grundsätzlich kann auch der optische Weg durch die Referenzstrecke länger sein als der optische Weg für die Echopulse. Es kommt nur darauf an, dass der Unterschied hinreichend groß ist, dass sich die Pulse nicht im Detektor zeitlich überlappen können.

Bei einer weiteren besonders bevorzugten Ausgestaltung der erfindungsgemäßen Vorrichtung sind im optischen Weg der Messpulse und/oder im optischen Weg der Referenzpulse optische Fasern vorhanden. Definierte optische Wegstrecken lassen sich mit Hilfe von optischen Fasern besonders einfach verwirklichen. Insbesondere kann die erfindungsgemäß geforderte hinreichende Differenz zwischen der optischen Weglänge für die Messpulse und der optischen Weglänge der Referenzpulse sehr einfach und Platz sparend realisiert werden. Darüber hinaus sind Aufbauten mit optischen Fasern gegenüber mechanischer Erschütterung vergleichsweise unempfindlich.

Als optische Fasern können grundsätzlich Monomode-Fasern eingesetzt werden. Dies hat den Vorteil, dass sich nur eine elektromagnetische Mode im Lichtleiter fortpflanzt und somit auch sehr kurze Pulse möglich sind. Für zahlreiche Anwendungen sind jedoch Multimode-Glasfasern zweckmäßig, da mit diesen Komponenten am Detektor höhere Intensitäten erzielt werden können.

Der Pulsabschwächer kann in einem einfachen Fall mechanisch aufgebaut und beispielsweise eine steuerbare mechanische Blende oder ein Graukeilrad sein.

Die Steuerung des Pulsabschwächers wird bevorzugt kontinuierlich nachgeführt. Hierfür wird die Entfernungs- und Referenzmessung repetierend durchgeführt. Die Nachregelung der Echopulse ist dabei durch die Schnelligkeit des Pulsabschwächers begrenzt. Eine raschere Nachregelung kann deshalb erzielt werden, wenn der Pulsabschwächer ein elektrooptischer, magnetooptischer oder akustooptischer Modulator oder ein AOTF ist.

Die Pulse der Startsignale, Echosignale und Referenzsignale sind aus elementaren elektronischen Gründen im Allgemeinen nicht symmetrisch, so dass die Annahme eines Zeitpunkts in der Mitte zwischen zwei Zeitpunkten, bei denen eine Komparatorschwelle überschritten beziehungsweise unterschritten wird, fehlerbehaftet ist. Eine weitere vorteilhafte Variante des erfindungsgemäßen Verfahrens besteht deshalb darin, dass Pulsbreiten der Startsignale, Echosignale und/oder der Referenzsignale kompensiert werden. Zur Durchführung dieser Kompensationen werden beispielsweise Tabellen aufgenommen, in denen zu einzelnen Werten für die Pulshöhe jeweils ein bestimmter Zeitpunkt relativ zu den Schaltzeitpunkten eines Komparators abgelegt sind.

Zweckmäßig werden vor Aufnahme eines eigentlichen Messbetriebs Tabellen zur Kompensation der Feininterpolatoren und/oder zur Pulskompensation aufgenommen. Die Tabellen zur Pulskompensation werden bevorzugt im Rahmen eines Grundabgleichs vor Auslieferung des Geräts an einen Kunden generiert.

Eine Tabelle oder mehrere Tabellen für die Kompensation der Feininterpolatoren können während des Messbetriebs kontinuierlich nachgeführt werden. Auf diese Weise werden bestimmte Driften, die beispielsweise auf einer Minuten- oder Stundenskala erfolgen, wie Temperaturdriften, berücksichtigt.

Im Hinblick auf die Genauigkeit der Messergebnisse ist es weiterhin von Vorteil, wenn die Entfernungsmessung repetierend durchgeführt wird und über eine Vielzahl von Messwerten gemittelt wird. Die Messgenauigkeit kann dann entsprechend elementarer Statistik gesteigert werden. Um prinzipiell auch in der Lage zu sein, die Entfernung von sich bewegenden Objekten zu messen, ist es zweckmäßig, für die Mittelwertbildung nicht alle aufgenommenen Messwerte zu berücksichtigen, sondern vielmehr für die Messwerte eine gleitende Mittelwertbildung durchzuführen.

Weitere Vorteile und Eigenschaften der vorliegenden Erfindung werden mit Bezug auf die beigefügten Figuren erläutert. Hierin zeigt:
- Fig. 1: eine schematische Ansicht einer Vorrichtung zur optoelektronischen Distanzmessung, bei der ein Startsignal optisch aus einer Lichtquelle abgeleitet wird;
- Fig. 2: Signalverläufe für die Vorrichtung aus Fig. 1;
- Fig. 3: eine schematische Darstellung einer Vorrichtung zur optoelektronischen Distanzmessung, bei der ein Startsignal elektrisch aus einer Lichtquelle abgeleitet wird;
- Fig. 4: Signalverläufe für die in Fig. 3 gezeigte Vorrichtung;
- Fig. 5: eine schematische Ansicht eines Ausführungsbeispiels einer erfindungsgemäßen Vorrichtung;
- Fig. 6: Signalverläufe für die in Fig. 5 gezeigte Vorrichtung;
- Fig. 7: ein Blockdiagramm von wesentlichen Komponenten einer erfindungsgemäßen Vorrichtung;
- Fig. 8: die für die Zeitmessung bei einer erfindungsgemäßen Vorrichtung relevanten Signalverläufe;
- Fig. 9: ein Beispiel einer Korrekturtabelle für einen Feininterpolator;
- Fig. 10: ein Diagramm mit kumulierten Messhäufigkeiten, aufgetragen gegen die Feininterpolatorwerte;
- Fig. 11: ein Diagramm mit kumulierten Messhäufigkeiten gegen aufgetragen gegen einen korrigierten Feininterpolatorwert; und
- Fig. 12: ein schematisches Flussdiagramm mit den wesentlichen Schritten zur Ermittlung der Entfernung eines Objekts.

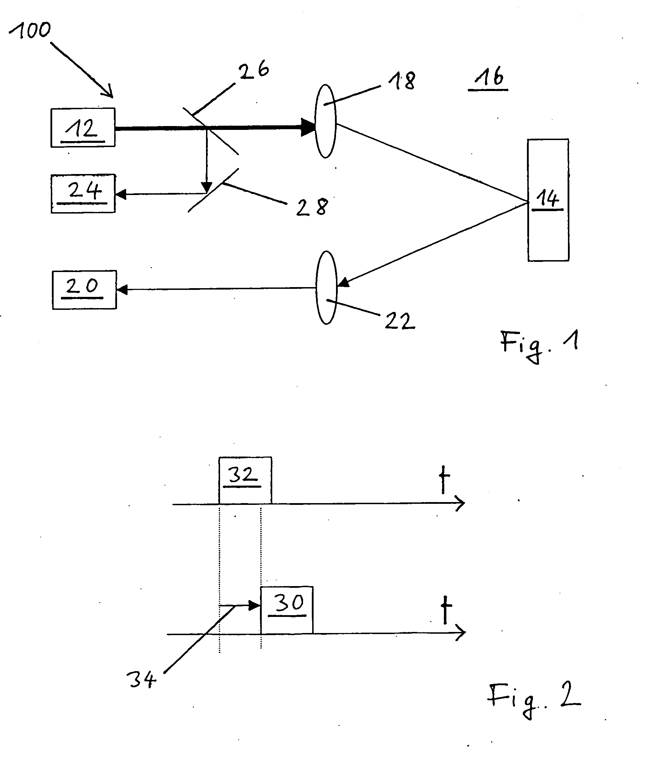

Ein Startsignal für die Zeitmessung kann auf verschiedenen Wegen erhalten werden. Unter Bezug auf die Figuren 1 bis 4 werden zwei dieser Methoden beschrieben. Hierin werden die Begriffe "Signal" und "Puls" mitunter gleichbedeutend verwendet. Für die weiter unten folgende Beschreibung der Erfindung soll unter "Puls" zumeist ein optisches Signal sowie unter "Signal" ein elektrisches oder elektronisches Signal verstanden werden.

Zunächst wird mit Bezug auf die Figuren 1 und 2 ein Verfahren erläutert, bei welchem ein Startsignal aus einem optischen Startpuls erhalten wird. Fig. 1 zeigt eine Vorrichtung 100 zur berührungslosen optischen Distanzmessung. Eine Lichtquelle 12 sendet dabei Lichtpulse aus, die über eine Linse 18 auf ein Objekt 14 in einem Nachweisbereich 16 geleitet werden. Nach Reflexion an dem Objekt 14 gelangen diese Lichtpulse, die nunmehr als Echopulse 30 bezeichnet werden, über eine Linse 22 auf einen Detektor 20 und werden dort nachgewiesen. Der Detektor 20 wird deshalb auch als Echoempfänger bezeichnet. Das Signal dieses Detektors 20, das auch als Echosignal 30 bezeichnet wird, wird der Messeinheit als Stoppsignal zugeführt. Um nun ein Startsignal für die Zeitmessung und damit für die Bestimmung der Entfernung des Objekts 14 zu gewinnen, werden bei dieser Methode aus den von der Lichtquelle 12 erzeugten Lichtpulsen ein Teil über einen halbdurchlässigen Spiegel 26 ausgekoppelt und über einen Umlenkspiegel 28 einem weiteren Detektor 24 zugeführt. Das Ausgangssignal des weiteren Detektors 24, der auch als Startpulsempfänger bezeichnet wird, wird einer nachgeordneten Messeinheit zur Bearbeitung zugeführt.

Fig. 2 zeigt den zeitlichen Verlauf eines Echosignals 30, welches im Detektor 20 nachgewiesen wird, sowie des im weiteren Detektor 24 nachgewiesenen optischen Startsignals 32. Aus einer Zeitdifferenz, welche in Fig. 2 durch einen Pfeil 34 angedeutet ist, kann, gegebenenfalls nach Vornahme weiterer Korrekturen und Kompensationen, auf die Entfernung des Objekts 14 zur Vorrichtung 100 geschlossen werden. Insbesondere ist aus Fig. 2 ersichtlich, dass das Echosignal und das optische Startsignal 32 einander zeitlich überlappen können, da sie in unterschiedlichen Detektoren nachgewiesen werden.

Durch die Verwendung von zwei optischen Detektoren ist es außerdem möglich, auch sehr kurze Entfernungen, beispielsweise unmittelbar vor den Linsen 18, 22, zu erfassen.

Voraussetzung für eine hohe Messgenauigkeit, also geringe Messfehler, ist bei diesem Verfahren, dass sich die Detektoren 20, 24 nahezu identisch verhalten. Nachteilig bei diesem Aufbau ist demnach, dass die grundsätzlich immer vorhandenen und unterschiedlichen Bauteiltoleranzen, selbst wenn sie gering sind, zwangsläufig zu unterschiedlichen Eigenschaften der beiden Detektoren 20, 24 führen. Diese Unterschiede schlagen sich somit unmittelbar in Messfehlern nieder. Solche Fehler können beispielsweise in Form von Laufzeitunterschieden auftreten, die stark temperaturabhängig sind. Solche Ungenauigkeiten können zwar grundsätzlich durch Messen der Temperatur und Berücksichtigung geeigneter Kompensationen ausgeglichen werden, die aber selbst nicht zwingend langzeitstabil sind.

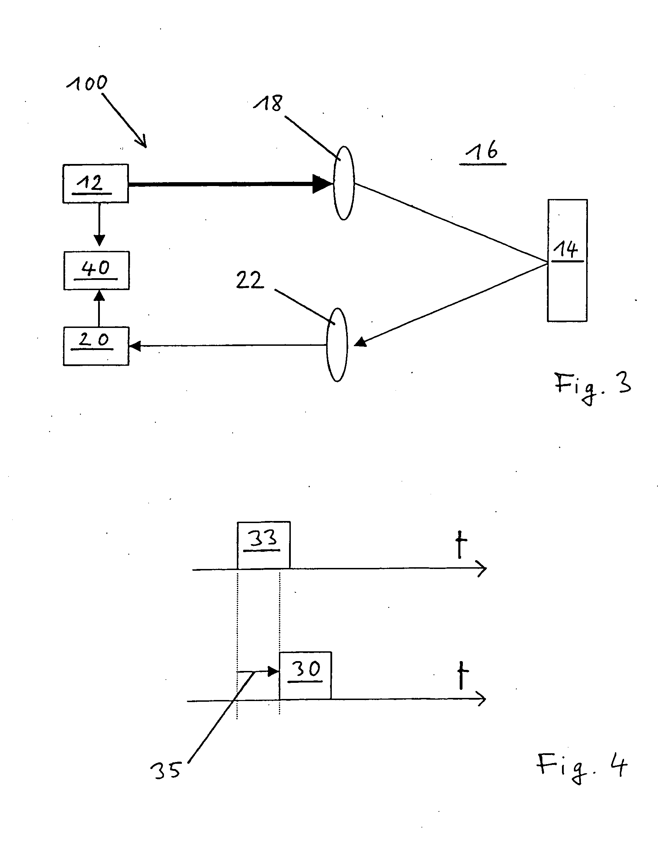

Bei einer alternativen Variante des Verfahrens wird ein Startsignal nicht unmittelbar aus dem gesendeten Laserlicht erzeugt, sondern aus einer elektrischen Ansteuerung der Lichtquelle gewonnen. Dieses Verfahren wird mit Bezug auf die Figuren 3 und 4 erläutert. Äquivalente Komponenten sind dort mit denselben Bezugszeichen wie in den Figuren 1 und 2 versehen und werden nicht gesondert beschrieben. In Fig. 3 ist schematisch dargestellt, dass aus der Lichtquelle 12 ein Signal abgeleitet und einer Zeitmesseinrichtung 40 zugeführt wird.

Hierbei handelt es sich um ein elektrisches Startsignal 33, dessen zeitlicher Verlauf in Fig. 4 gezeigt ist. Ebenso wird ein Ausgangssignal des Detektors 20, bei welchem es sich um ein Echosignal 30 handelt, der Zeitmesseinrichtung 40 eingegeben. Der zeitliche Verlauf des Echosignals 30 ist ebenfalls in Fig. 4 dargestellt. Wie bei dem im Zusammenhang mit den Figuren 1 und 2 beschriebenen Verfahren, können sich auch hier das Startsignal 33 und der Echopuls 30 zeitlich überlappen, da sie physikalisch auf unterschiedlichen Wegen gewonnen werden. Aus der Zeitdifferenz zwischen dem Startsignal 33 und dem Echopuls 30, die in Fig. 4 durch einen Pfeil 35 gekennzeichnet ist, kann die Entfernung des Objekts 14 erhalten werden.

Vorteilhaft ist bei diesem Verfahren, dass einfachere und vor allem preiswertere Bauteile verwendet werden können.

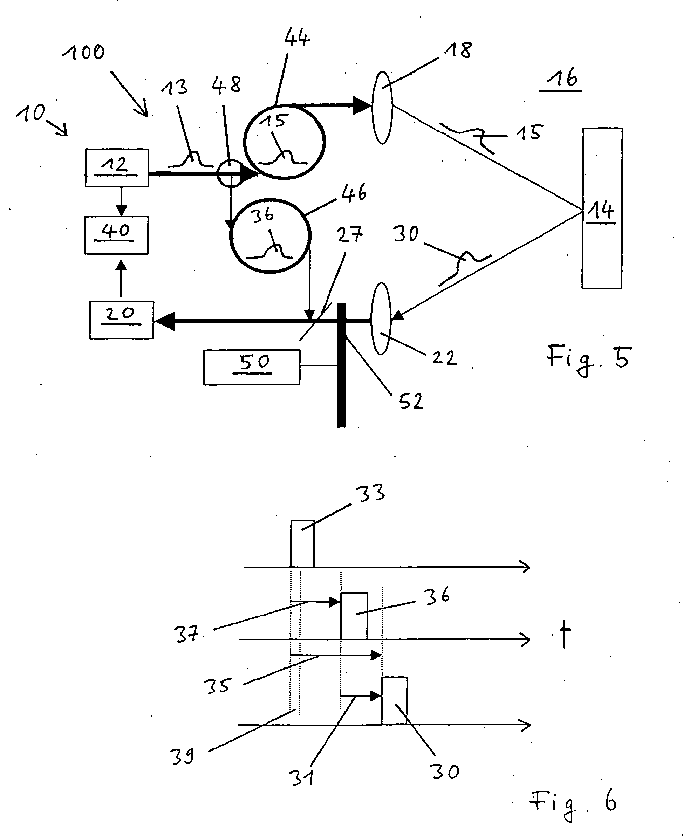

Ein Ausführungsbeispiel einer erfindungsgemäßen Vorrichtung wird mit Bezug auf die Figuren 5 und 6 beschrieben. Äquivalente Komponenten sind dort mit denselben Bezugszeichen wie in den Figuren 1 bis 4 gekennzeichnet.

Die in Fig. 5 gezeigte Vorrichtung 100 weist als wesentliche Komponenten eine Sensoreinheit 10 mit einer Lichtquelle 12 und einem Detektor 20 auf. Die Lichtquelle 12 sendet Lichtpulse 13 aus, welche in einer Einrichtung 48 in Messpulse 15 und Referenzpulse 36 aufgeteilt werden. Bei der Einrichtung 48 kann es sich beispielsweise um einen teildurchlässigen Spiegel handeln. Typischerweise werden nur einige Prozent der einkommenden Intensität als Referenzpuls ausgespiegelt. Sodann werden die Messpulse 15 durch eine optische Faser 44, welche auch als Messfaser bezeichnet werden kann, geleitet. Über eine Linse 18 als Teil einer Messoptik werden die Messpulse 15 im Anschluss auf ein Objekt 14 geleitet, dessen Entfernung zur Sensoreinheit 10 gemessen werden soll. Die Messpulse 15 werden am Objekt 14 reflektiert. Die reflektierten Messpulse 15, die auch als Echopulse 30 bezeichnet werden können, gelangen auf eine Linse 22 als weiterem Teil einer Messoptik, treten sodann durch einen Pulsabschwächer 50 und gelangen schließlich zum Detektor 20, wo sie nachgewiesen werden. Ein Ausgangssignal des Detektors 20 wird einer Zeitmesseinrichtung 40 eingegeben. Außerdem wird der Zeitmesseinrichtung 40 ein von der Lichtquelle 12 abgeleitetes elektrisches Startsignal zugeführt. Das elektrische Startsignal ist das Abbild des Stroms der Laserdiode. Das Laserlicht selbst wird um einige Pikosekunden verzögert erzeugt. Der elektrische Startpuls wird als Bezugspunkt für die Referenz- und die Entfernungsmessung verwendet. Bei dem Pulsabschwächer 50 handelt es sich im gezeigten Beispiel um eine einstellbare mechanische Blende 52.

Um die oben im Zusammenhang mit den Figuren 1 bis 4 erläuterten Ungenauigkeiten und Messfehler zu vermeiden, wurde erfindungsgemäß eine sogenannte Referenzstrecke in den Sensor integriert. Mit Hilfe dieser Strecke können auftretende Fehler, beispielsweise Driften, eliminiert werden.

Fig. 5 zeigt schematisch den Aufbau einer solchen Referenzstrecke. Die in der Einrichtung 48 abgeleiteten Referenzpulse 36 werden über eine optische Faser 46, die auch als Referenzfaser bezeichnet werden kann, auf einen teildurchlässigen Spiegel 27 und von diesem auf den Detektor 20 geleitet, wo sie nachgewiesen werden. Ein entsprechendes Nachweissignal wird wiederum der Zeitmesseinrichtung 40 zugeführt. Der Referenzpuls wird über einen definiert verzögerten optischen Kurzschluss im optischen Empfänger erzeugt. Er repräsentiert die Referenzentfernung für die Messung. Der Echopuls wird im gleichen optischen Empfänger wie der Referenzpuls erzeugt. Er wird vom Messziel, also vom Objekt, reflektiert. Die Zeitverzögerung zum gesendeten Laserpuls ist das Maß für die Entfernung.

Der zeitliche Verlauf der einzelnen Signale, die der Zeitmesseinrichtung 40 zugeführt werden, ist in Fig. 6 schematisch dargestellt. Zunächst erhält die Zeitmesseinrichtung 40 als erstes ein aus der Lichtquelle 12 abgeleitetes elektrisches Startsignal 33. Über die im Wesentlichen durch die optische Faser 46 gebildete Referenzstrecke gelangt danach ein Referenzpuls 36 auf den Detektor 20. Eine Zeitverzögerung zwischen dem elektrischen Startsignal 33 und dem Zeitpunkt, zu dem der Referenzpuls 36 im Detektor 20 nachgewiesen wird, ist in Fig. 6 durch einen Pfeil 37 gekennzeichnet.

Nochmals zeitlich verzögert durch eine Laufzeit zum nachzuweisenden Objekt 14 und durch eine Verzögerungsstrecke in der optischen Faser 44 im Gerät wird der Detektor 20, welcher auch als Echoempfänger bezeichnet wird, mit dem Echosignal 30 beaufschlagt. Die Differenz zwischen der optischen Weglänge in der optischen Faser 46, die auch als Referenzfaser bezeichnet wird und derjenigen in der auch als Messfaser bezeichneten optischen Faser 44 entspricht im Wesentlichen der Offsetstrecke. Die Zeitdifferenz zum elektrischen Startsignal 33 ist in Fig. 6 durch einen Pfeil 35, die Laufzeitdifferenz zum Referenzpuls 36 durch einen Pfeil 31 gekennzeichnet. Um für die Messung der Referenz- und der Echopulse jeweils weitestgehend gleiche Verhältnisse zu erhalten, werden erfindungsgemäß mit Hilfe des Pulsabschwächers 50 die Echopulse 30 so abgeschwächt, dass sie weitestgehend den Referenzpulsen 36 entsprechen. Die Pulse können beispielsweise auf im Wesentlichen übereinstimmende Pegel oder Pulshöhe, alternativ aber auch auf etwa gleiche Fläche der Peaks, geregelt werden. Die Regelung auf dieselbe Höhe oder Fläche hat den Vorteil, dass eine Drift der Pulsformen, die eigentlich ein Nachführen von Kompensationstabellen erforderlich machen würde, praktisch ohne Auswirkung bleibt, da sie sich auf Referenz- und Echopuls in derselben Weise auswirkt und deshalb eliminiert wird. Um für den Referenzpuls eine gewünschte Höhe zu erhalten, kann in dessen Strahlengang ein fester Pulsabschwächer, beispielsweise ein fest zu justierendes Graukeilrad, eingebaut werden.

Die Messung der Distanzen erfolgt dann abwechselnd zwischen Startsignal 33 und Referenzpuls 36 beziehungsweise zwischen Startsignal 33 und Echopuls 30. Durch Differenzbildung der jeweils gemessenen Werte können mögliche Driften, die in Fig. 6 mit dem Bezugszeichen 39 gekennzeichnet sind, eliminiert werden.

Bei diesem Ausführungsbeispiel der Erfindung ist die Lichtquelle 12, die auch als Sender oder Sendediode bezeichnet werden kann, mit einer Glasfaser gekoppelt, die sich in eine Messfaser 44 und eine Referenzfaser 46 teilt, wobei die Messfaser 44 um die Offsetstrecke länger als die Referenzfaser 46 ausgeführt ist. Das Startsignal 33 wird sowohl für eine Entfernungsmessung als auch für eine Referenzmessung aus der elektrischen Ansteuerung der Sendediode gewonnen. Der gemessene Wert für die Referenzstrecke kann über einen längeren Zeitraum gemittelt werden.

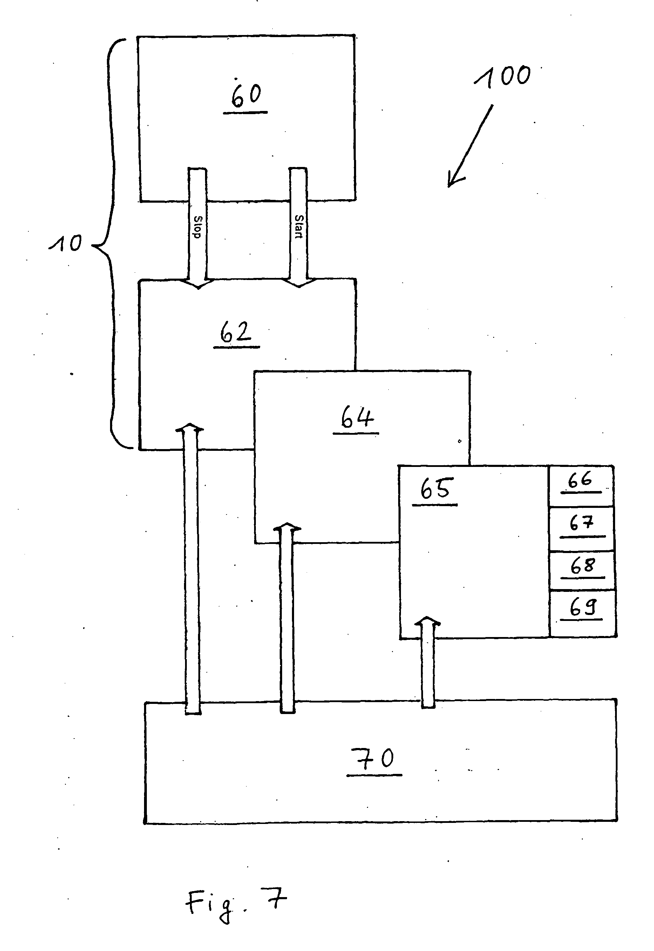

Fig. 7 zeigt schematisch die wesentlichen Komponenten einer erfindungsgemäßen Vorrichtung 100 zur optoelektronischen berührungslosen Distanzmessung. Wesentlicher Teil der Vorrichtung 100 ist eine Sensoreinheit 10, welche die vorstehend erläuterte Optoelektronik 60 und einen Messkern 62 umfasst. Zum präzisen Ermitteln der Zeitdifferenzen sind eine Digital-Datenerfassung 64 sowie eine Analog-Datenerfassung 65 mit insgesamt vier Feininterpolatoren 66, 67, 68, 69 vorgesehen. Sämtliche dieser Komponenten werden mit Hilfe eines Auswerte-/Steuerungsrechners 70 gesteuert, dem auch die jeweiligen Daten zur Verarbeitung zugeführt werden.

Eine Ablaufsteuerung für die Messungen wird durch ein FPGA durchgeführt. Das FPGA führt die Messungen selbstständig durch, um Rohwerte zu erhalten und steuert dabei den Laser und liest den ADC aus. Darüber hinaus kann es einen Blendenmotor des Pulsabschwächers regeln. Die Lichtquelle 12, wobei es sich um einen Laser handelt, wird gezündet, und die Messimpulse des elektrischen Startsignals sowie die Signale des optischen Detektors werden einem Komparator und anschließend dem FPGA zugeführt. Das FPGA wandelt die zeitabhängigen Signale in Pulsbreiten, Feininterpolatorwerte und digitale Zählimpulse um. Die Pulsbreiten und die Feininterpolatorwerte werden anschließend in einem Zeit-Amplituden-Konverter, TAC, und nachfolgend in einem Analog-Digital-Konverter, ADC, in digitale Signale umgewandelt. Ein Messrechner erhält die Messwerte vom FPGA und passt sie zur Übertragung zu einem PC an. Die Rohdaten mehrerer Messungen werden gesammelt und an den PC übertragen.

Parallel dazu erfolgt eine Regelung des Pulsabschwächers 50 mit regelbarer Blende 52 für den Echopuls 30. Diese Regelung kann beispielsweise über eine Pulsweitenmodulation für einen Betrieb mit einem Gleichstrommotor erfolgen. Alternativ kann auch ein Schrittmotor eingesetzt werden.

Zur Blendenregelung erhält das FPGA eine Sollwertvorgabe. Gleichzeitig liest es vom ADC einen Istwert einer Pulsbreite des Messwerts aus. Abhängig davon, ob dieser Messwert der Messwert eines Referenzpulses 36 oder eines Echopulses 30 ist, wird beim Echopuls ein Ist-/Sollwertvergleich durchgeführt und bei Abweichungen ein Gleichspannungspuls variabler Länge bis zum Erreichen eines Ausregelungszustands erzeugt. Bei sehr großen Abweichungen läuft der Blendenmotor dauernd. Bei Annäherung an den Sollwert werden die Pulse kontinuierlich auf 10 ms Länge verkürzt. Die Pulsfrequenz kann beispielsweise 10 Pulse/s betragen.

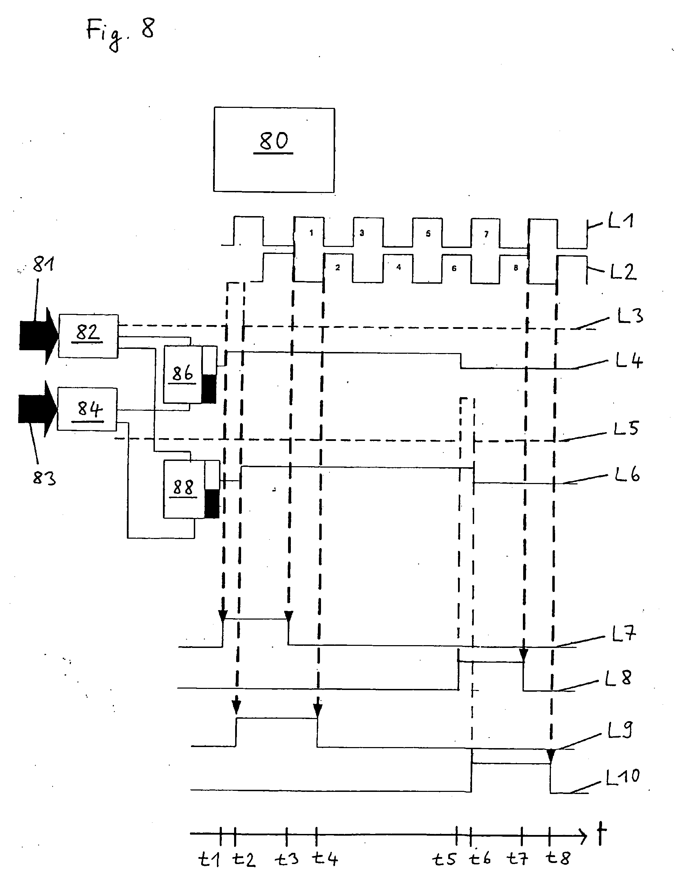

Der zeitliche Ablauf der für die Zeitmessung relevanten Signale wird mit Bezug auf Fig. 8 erläutert. Ein elektrischer Startpuls 81 und ein Echo- oder Referenzpuls 83 werden jeweils Komparatoren 82, 84 zugeführt. Die Ausgänge dieser Komparatoren sind mit Flip-Flops 86, 88 verbunden. Anhand der Ausgänge L4 und L6 der Flip-Flops 86, 88 erfolgt die Zeitmessung. Zunächst wird durch Vergleich der Ausgänge L4 und L6 mit einem Clocksignal L1 und einem invertierten Clocksignal L2, welche aus einer Clock 80 abgeleitet werden, ein digitaler Rohwert der Messung gewonnen. Dieser digitale Rohwert ist die grobe Messung der Entfernung auf eine halbe Clock-Periode genau und entspricht einem Zählwert zwischen dem Startsignal L3 und dem Echo-/Referenzsignal L5. Um die mit sehr kurzen Pulsen verbundenen Schwierigkeiten zu vermeiden, zählt die Messlogik erst die zweite, auf eine steigende Flanke des Startsignals L3 folgende steigende Flanke der Clock L1. Entsprechend wird auf eine abfallende Flanke des Startsignals L3 erst die zweite steigende Flanke des invertierten Clocksignals L3 gezählt. Analog ist das Zählverhalten für das Echo-/Referenzsignal L5, wo wiederum erst die jeweils zweite steigende Flanke gezählt wird.

Eine Anfangszeitdifferenz zwischen dem Startsignal L3 und der ersten für den digitalen Rohrwert gezählten Flanke sowie eine Endzeitdifferenz zwischen dem Echo-/Referenzsignal L5 und der letzten für den digitalen Rohwert gezählten Flanke wird mit Hilfe von Feininterpolatoren gemessen. Insgesamt werden im gezeigten Beispiel vier Feininterpolatoren verwendet, deren Eingangssignale mit L7, L8, L9 und L10 gekennzeichnet sind.

Der Zeitablauf der Signale wird mit Bezug auf die Zeitskala im unteren Bereich von Fig. 8 erläutert.

Der Zeitpunkt t1 entspricht einer ansteigenden Flanke des Startsignals L3. Dies stellt zugleich den Beginn der Zeitmessung für den ersten Feininterpolator L7 dar. Zum Zeitpunkt t2 fällt das Startsignal L3 wieder ab, woraufhin der dritte Feininterpolator L9 zu messen beginnt. Zu den Zeitpunkten t3 und t4 wird die Zeitmessung der Feininterpolatoren L7 bzw. L9 beendet, was einer ansteigenden Flanke der Clock L1 beziehungsweise der invertierten Clock L2 entspricht.

Analog werden die Feininterpolatoren L8, L10 durch die ansteigende beziehungsweise abfallende Flanke des Echo-/Referenzsignals L5 gestartet und durch die jeweils zweite darauf folgende ansteigende Flanke des Clocksignals L1 beziehungsweise der invertierten Clock L2 beendet. Dies erfolgt zu den Zeitpunkten t5 bis t8.

Die insgesamt vier Feininterpolatorwerte werden zu einem analogen Rohwert summiert, wobei in diese Summe die zur Anfangszeitdifferenz gehörenden Feininterpolatorwerte positiv und die zur Endzeitdifferenz gehörenden Feininterpolatorwerte negativ eingehen. Sämtliche Feininterpolatorwerte werden vor dieser Summenbildung einzeln kompensiert, was nachstehend noch genauer erläutert wird. Der so gewonnene analoge Rohwert kann als Feinbereich für die Entfernungsmessung angesehen werden.

Der analoge Rohwert und der digitale Rohwert werden zu einem komplexen Rohsignal addiert, das im Anschluss noch durch weitere Kompensationsschritte zum eigentlichen Messergebnis umgewandelt werden muss.

Um Nichtlinearitäten, Offset- und Steigungsfehler der Feininterpolatoren kompensieren zu können, werden Korrekturtabellen aufgenommen.

Bei jeder Einzelmessung werden vier Feininterpolatorwerte erzeugt, welche die Korrekturwerte zur Clock-Flanke für die steigenden und fallenden Flanken der Start- und Echopulse wiedergeben. Je genauer diese Feininterpolatorwerte sind, umso genauer sind die jeweilige Einzelmessung und demzufolge auch das Endergebnis.

Im gezeigten Beispiel beträgt die Frequenz der Clock 80 75 MHz. Die von den Feininterpolatoren zu messenden Zeiten können deshalb Werte zwischen 13 ns und 26 ns annehmen. Während dieser Zeittore wird eine Kapazität um ca. ein Volt geladen, wobei die Kondensatorspannungen jeweils ein Äquivalent zu der Zeit sind.

Im Einzelnen werden die Korrekturtabellen wie folgt gewonnen: Der AD-Wandler hat eine Auflösung von 12 Bit bei 5 V. Hieraus folgt ein Ausgabewert der Feininterpolatoren von etwa 800 bis etwa 1600. Aufgrund der erwähnten Nichtlinearitäten, Offset- und Steigungsfehlern ist aber real mit verschobenen und/oder gespreizten Werten zu rechnen. Diese Variationen sollen über eine Korrekturtabelle korrigiert werden.

Beim Aufbau der Tabelle sollen 1000 Häufigkeitsstufen im Durchschnitt mit 64 Ereignissen belegt sein. Das bedeutet, man benötigt 64000 Messwerte. Bei einer zu erwartenden Spreizung der AD-Wandlerwerte von etwa 800 treten dann pro Feininterpolatorwert etwa 80 Ereignisse ein. Es wird nun eine Tabelle aufgestellt, in der für jeden erhaltenen Feininterpolatorwert ein Zähler hochgezählt wird. Nach 64000 Messungen erhält man eine Verteilung der Häufigkeit der jeweils gemessenen Feininterpolatorwerte. Eine solche Verteilung wird für alle vier Feininterpolatoren gleichzeitig gemessen.

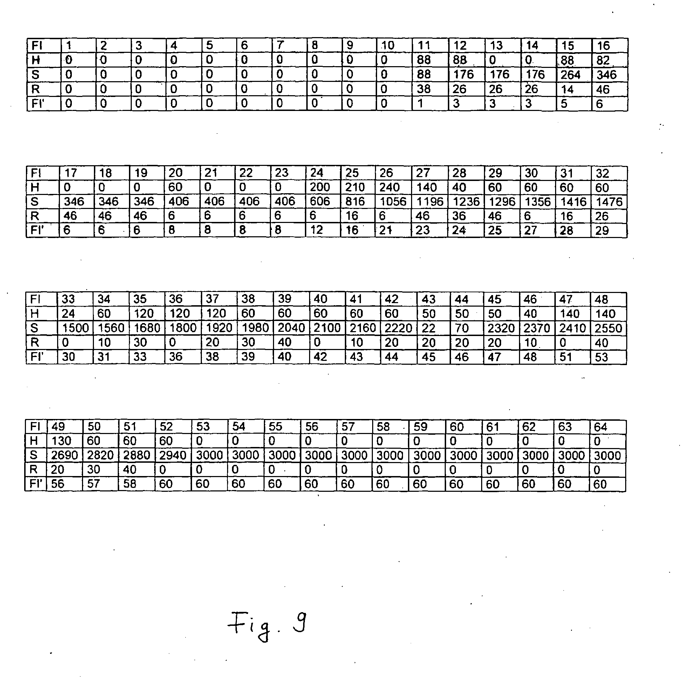

In Fig. 9 ist ein Beispiel einer Tabelle gezeigt, in welcher in der ersten Zeile die Feininterpolatorwerte, gekennzeichnet durch FI eingetragen sind. In der zweiten Zeile ist die Häufigkeit H eingetragen, mit welcher der jeweilige Feininterpolatorwert FI bei einer Gesamtzahl von 3000 Messungen erhalten wurde. Zeile 3 schließlich beinhaltet die summierte Häufigkeit S. Beispielsweise beträgt diese summierte Häufigkeit S ab dem Feininterpolatorwert FI = 53 bis FI = 64 konstant 3000, da keiner dieser Werte bei einer der 3000 durchgeführten Messungen erreicht wurde.

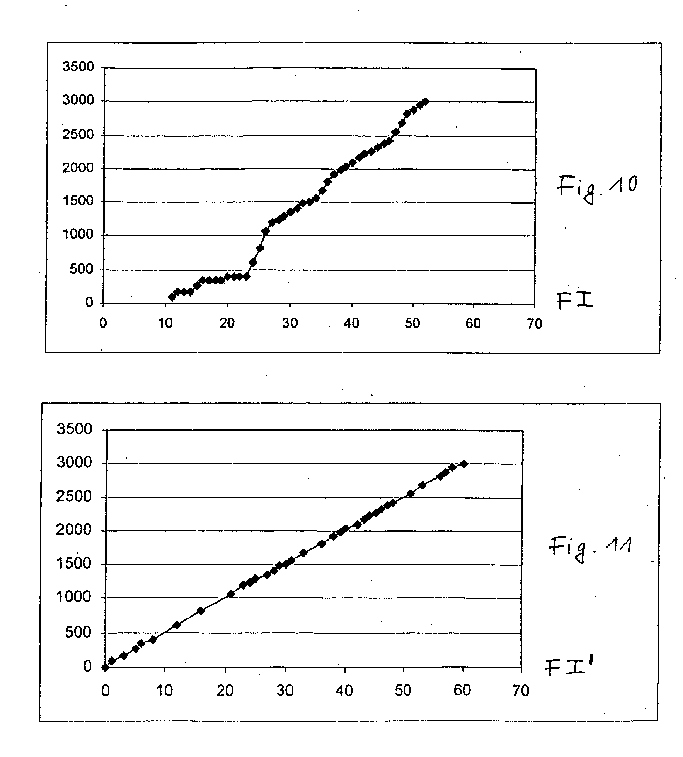

Fig. 10 zeigt die summierte Häufigkeit S aufgetragen gegen die Feininterpolatorwerte FI. Aus Fig. 10 ist unmittelbar ersichtlich, dass die Feininterpolatorwerte FI nicht gleichmäßig verteilt sind. Da aber das zu messende Zeitintervall gegenüber dem Clocksignal L1 keinerlei Phasenkorrelation aufweist, müssen sämtliche Feininterpolatorwerte mit derselben Häufigkeit gemessen werden. Mithin muss die summierte Häufigkeit S linear verteilt sein, da mathematisch die Feininterpolatorwerte gleichmäßig zwischen den Clock-Flanken verteilt sind. Deshalb ist eine Linearisierung der gemessenen summierten Häufigkeit S zulässig.

Es wird nun die eigentliche Korrektur berechnet. Der Korrekturwert FI' entspricht jeweils den Ganzen bei Division der summierten Häufigkeit S durch 50. Dies entspricht bei 3000 Messungen insgesamt 60 Häufigkeitsstufen. Außerdem ist in der Tabelle in Fig. 9 der verbleibende Rest R bei Division der summierten Häufigkeit S durch 50 eingetragen. Beispielsweise erhält man bei einem Feininterpolatorwert 23 eine summierte Häufigkeit S von 406. Division durch 50 ergibt einen korrigierten Feininterpolatorwert von FI' = 8 bei einem Rest von R = 6.

Bei dem oben erläuterten in der Praxis durchgeführten Beispiel werden stattdessen 64000 Messwerte aufgenommen und die summierte Häufigkeit S wird durch 64 dividiert. Dies lässt sich sehr einfach und schnell durch Wegstreichen der 6 geringwertigsten Bits erzielen. Man hat nun eine Tabelle erhalten, wo bei jedem beliebigen Feininterpolatorwert ein Korrekturwert von 0 bis 1000 ausgegeben wird. Die Häufigkeitsverteilung für die korrigierten Feininterpolatorwerte ist dann im Wesentlichen linear. Eine solche Tabelle wird für alle vier Feininterpolatoren aufgenommen.

Fig. 11 zeigt für die Werte der Tabelle aus Fig. 9 die summierte Häufigkeit S aufgetragen gegen die korrigierten Feininterpolatorwerte FI'. Es ist unmittelbar ersichtlich, dass die summierte Häufigkeit S nunmehr, wie gefordert, einen im Wesentlichen linearen Verlauf aufweist.

Zweckmäßig wird vor Beginn des eigentlichen Messbetriebs die Referenz sehr präzise mit einer Vielzahl von Messungen bestimmt. Beispielsweise können hierzu 20.000 Messungen durchgeführt werden. Im späteren eigentlichen Messbetrieb kann dann beispielsweise jeder 100. Messwert zur Nachführung eventueller Driften des Referenzwerts herangezogen werden. Hierbei kann ebenfalls eine geeignete Mittelwertbildung mit vorheriger Plausibilitätsprüfung durchgeführt werden.

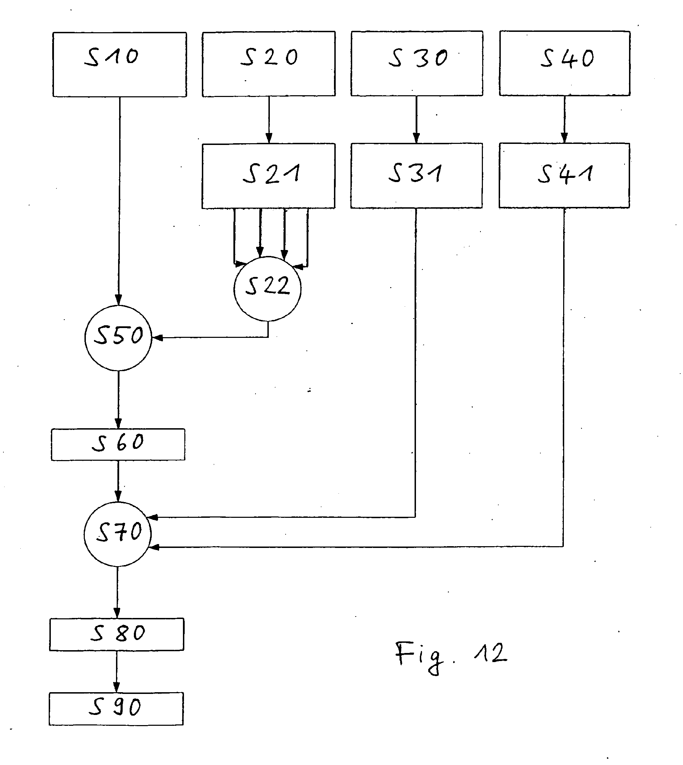

Anhand von Fig. 12 werden die wesentlichen für die Gewinnung des endgültigen Messergebnisses aus den gemessenen Zeiten relevanten Schritte erläutert.

Zunächst wird im Schritt S10 der digitale Rohwert durch vergleich von Startsignal und Echo-/Referenzsignal mit dem Clocksignal L1 und dem invertierten Clocksignal L2 gewonnen. Außerdem werden im Schritt S20 vier Feininterpolatorwerte gewonnen, welche anhand von vier getrennten und ständig aktualisierten Kompensationstabellen kompensiert werden. Im Schritt S22 werden diese separat kompensierten Feininterpolatorwerte zum analogen Rohwert summiert. Im Schritt S50 wird der im Schritt S22 gewonnene analoge Rohwert sowie der digitale Rohwert aus Schritt S10 addiert. Man erhält somit im Schritt S60 den komplexen Rohwert oder Entfernungsrohwert.

Im Rahmen eines Grundabgleich des Geräts werden außerdem in den Schritten S31 und S41 Kompensationstabellen erstellt für die Pulsbreite des Startpulses und des Echo-/Referenzpulses. Die Pulsbreiten des Startpulses werden in Schritt S30, die Pulsbreiten des Echo-/Referenzpulses in Schritt S40 bestimmt. Aus den in S31 und S41 gewonnenen Tabellen folgen weitere additive Korrekturwerte zum Entfernungsrohwert, welche im Schritt S70 addiert werden.

Als letzter Schritt kann in S80 der sich aus der Referenzmessung ergebende Offsetwert abgezogen werden. Man erhält somit in Schritt S90 einen echten Entfernungswert.

Die Erfindung betrifft einen optoelektronischen Sensor zur berührungslosen Distanzmessung. Insbesondere bezieht sich die Erfindung auf eine Möglichkeit, auftretende Ungenauigkeiten und Driften von Feininterpolatoren zu verbessern beziehungsweise zu beherrschen.

Hierbei geht man davon aus, dass bei einem solchen statistischen Verfahren jeder durch die Feininterpolatoren gemessene Wert gleich häufig vorkommt. Mit Hilfe einer Überwachung der Anzahl der jeweils gemessenen Werte kann eine Aussage über die Nichtlinearität getroffen werden und die Verteilung entsprechend eine Gewichtung erhalten. Dasselbe gilt für die Überwachung des Mittelwerts, wobei bei einer Abweichung von Null eine Korrektur möglich ist.

Bei dem erfindungsgemäßen Verfahren und der erfindungsgemäßen Vorrichtung werden Messergebnisse von Feininterpolatoren statistisch ausgewertet, wobei eine Abweichung in der Gleichförmigkeit der Verteilung für eine Korrektur der Linearität und eine Abweichung des Mittelwerts für eine Driftkompensation herangezogen wird.

## Patentansprüche

1. Verfahren zur optoelektronischen berührungslosen Distanzmessung nach dem Laufzeitprinzip,
bei dem eine Entfernung eines Objekts (14) von einer Sensoreinheit (10) bestimmt wird aus einer Zeitdifferenz zwischen einem Startsignal (L3) und einem Echosignal (L5), das aus einem von dem Objekt (14) reflektierten optischen Messpuls (15) abgeleitet wird, wobei zur Bestimmung der Zeitdifferenz folgende Schritte durchgeführt werden:
a) durch Vergleich von Startsignal (L3) und Echosignal (L5) mit einer digitalen Clock (80) wird ein digitaler Rohwert (S10) gewonnen,
b) mit Hilfe von mindestens zwei Feininterpolatoren (66, 67, 68, 69) werden eine Anfangszeitdifferenz zwischen Startsignal (L3) und Beginn des digitalen Rohwerts (S10) sowie eine Endzeitdifferenz zwischen Echosignal und Ende des digitalen Rohwerts (S10) bestimmt,
c) den Feininterpolatoren (66, 67, 68, 69) werden jeweils der Anfangsdifferenz bzw. der Endzeitdifferenz entsprechende analoge Signale zugeführt und zu einer digitalen Anfangszeitdifferenz bzw. digitalen Endzeitdifferenz umgesetzt,
**dadurch gekennzeichnet,**
**dass** zur automatischen Kalibrierung der Feininterpolatoren (66, 67, 68, 69) eine Vielzahl von Messungen der Zeitdifferenz zwischen einem Startsignal (L3) und einem Echosignal (L5) nach den Schritten a) bis c) durchgeführt wird, wobei die zu messenden Zeitintervalle mit der digitalen Clock keine Phasenkorrelation aufweisen und
wobei unter Annahme einer Gleichverteilung für die Wahrscheinlichkeit, mit der Werte in einem bestimmten Werteintervall für die Anfangszeitdifferenz und die Endzeitdifferenz gemessen werden, Korrekturen für Nichtlinearitäten und/oder Driften der Kennlinien der Feininterpolatoren (66, 67, 68, 69) errechnet werden.

2. Verfahren nach Anspruch 1,
**dadurch gekennzeichnet,**
**dass** eine Referenzentfernung gemessen wird, indem Referenzpulse (36) über eine optische Referenzstrecke geleitet werden.

3. Verfahren nach Anspruch 2,
**dadurch gekennzeichnet,**
**dass** die Referenzpulse (36) mit demselben Detektor (20) wie die Echopulse (30) nachgewiesen werden.

4. Verfahren nach einem der Ansprüche 1 bis 3,
**dadurch gekennzeichnet,**
**dass** Pulsbreiten der Startsignale (L3), Echosignale (L5) und/oder der Referenzsignale (L5) kompensiert werden.

5. Verfahren nach einem der Ansprüche 1 bis 4,
**dadurch gekennzeichnet,**
**dass** zur Korrektur der Feininterpolatorwerte (FI) eine Summe (S) der Häufigkeiten (H), mit der einzelne Feininterpolatorwerte (FI) auftreten, gebildet wird und
**dass** korrigierte Fein interpolatorwerte (FI') gewonnen werden, indem die Summe (S) durch eine Konstante dividiert wird.

6. Verfahren nach einem der Ansprüche 1 bis 6,
**dadurch gekennzeichnet,**
**dass** insgesamt vier Feininterpolatoren (66, 67, 68, 69) eingesetzt werden.

7. Verfahren nach einem der Ansprüche 1 bis 6,
**dadurch gekennzeichnet,**
**dass** zur Bestimmung des digitalen Rohwerts (S10) erst ab einer zweiten, auf ein auslösendes Ereignis folgenden Flanke der Clock (80) gezählt wird.

8. Verfahren nach einem der Ansprüche 1 bis 7,
**dadurch gekennzeichnet,**
**dass** das Startsignal (L3) aus einer Steuerelektronik einer Lichtquelle (12) der Sensoreinheit abgeleitet wird.

9. Verfahren nach einem der Ansprüche 1 bis 8,
**dadurch gekennzeichnet,**
**dass** vor Aufnahme eines eigentlichen Messbetriebs Tabellen zur Kompensation der Feininterpolatoren (66, 67, 68, 69) und/oder zur Pulskompensation aufgenommen werden.

10. Verfahren nach einem der Ansprüche 1 bis 9,
**dadurch gekennzeichnet,**
**dass** während des Messbetriebs eine Tabelle für die Kompensation der Feininterpolatoren (66, 67, 68, 69) kontinuierlich nachgeführt wird.

11. Verfahren nach einem der Ansprüche 1 bis 10,
**dadurch gekennzeichnet,**
**dass** für die Messwerte eine gleitende Mittelwertbildung durchgeführt wird.

12. Verfahren nach einem der Ansprüche 5 bis 11,
**dadurch gekennzeichnet,**
**dass** die Division durch die Konstante durch Wegstreichen einer bestimmten Zahl von "Least significant Bits" erfolgt.

13. Vorrichtung zur optoelektronischen berührungslosen Distanzmessung nach dem Laufzeitprinzip, insbesondere zur Durchführung des Verfahrens nach einem der Ansprüche 1 bis 12,
mit einer Sensoreinheit (10) mit mindestens einer Lichtquelle (12) zum Aussenden von Lichtpulsen (13) und einem Detektor (20) zum Nachweis von Lichtpulsen (13), wobei eine Entfernung eines Objekts (14) von der Sensoreinheit (10) bestimmbar ist aus einer Zeitdifferenz zwischen einem Startsignal (L3) und einem Echosignal (L5), das aus einem von dem Objekt (14) reflektierten optischen Messpuls (15) abgeleitet ist, und
mit einer Zeitmesseinrichtung (40) zum Bestimmen der Zeitdifferenz, die folgende Komponenten aufweist:
eine digitale Clock (80) zum Bestimmen eines digitalen Rohwerts (S10) aus Startsignal (L3) und Echosignal (L5),
mindestens zwei Feininterpolatoren (66, 67, 68, 69) zum Bestimmen einer Anfangszeitdifferenz zwischen Startsignal (L3) und Beginn des digitalen Rohwerts (S10) und einer Endzeitdifferenz zwischen Echosignal (L5) und Ende des digitalen Rohwerts (S10) durch Umsetzen von der Anfangszeitdifferenz bzw. der Endzeitdifferenz entsprechenden analogen Signalen zu einer digitalen Anfangszeitdifferenz bzw. digitalen Endzeitdifferenz,
**dadurch gekennzeichnet,**
**dass** zur automatischen Kalibrierung der Feininterpolatoren (66, 67, 68, 69) eine Recheneinheit (70) vorhanden ist, welche auf Grundlage einer Vielzahl von Messungen der Zeitdifferenz zwischen einem Startsignal (L3) und einem Echosignal (L5), welches aus einem von dem Objekt (14) reflektierten optischen Messpuls (15) abgeleitet wird, eine statistische Auswertung vornimmt, wobei die zu messenden Zeitintervalle mit der digitalen Clock keine Phasenkorrelation aufweisen und
wobei die Recheneinheit (70) unter Annahme einer Gleichverteilung für die Wahrscheinlichkeit, mit der Werte in einem bestimmten Werteintervall für die Anfangszeitdifferenz und die Endzeitdifferenz gemessen werden, Korrekturen für Nichtlinearitäten und/oder Driften der Feininterpolatoren (66, 67, 68, 69) errechnet.

14. Vorrichtung nach Anspruch 13,
**dadurch gekennzeichnet,**
**dass** eine Einrichtung (48) zum Aufteilen der Lichtpulse (13) in jeweils einen Messpuls (15) und einen Referenzpuls (36) vorhanden ist und
**dass** eine Messoptik (18, 22) zum Leiten der Messpulse (15) auf das Objekt (14) und zum Leiten der von dem Objekt (14) reflektierten Messpulse (15) als Echopulse (30) auf den Detektor (20) vorhanden ist,
**dass** eine Referenzoptik (27) zum Leiten der Referenzpulse (36) in Richtung des Detektors (20) vorhanden ist, wobei ein optischer Weg der Referenzpulse (36) um mindestens eine Offsetstrecke kürzer oder länger ist als ein optischer Weg der Messpulse (15), und
**dass** der Detektor (20) zum abwechselnden quantitativen Nachweis sowohl der Echopulse (30) als auch der Referenzpulse (36) dient.

15. Vorrichtung nach Anspruch 14,
**dadurch gekennzeichnet,**
**dass** im Strahlengang der Echopulse (30) ein steuerbarer Pulsabschwächer (50) angeordnet ist zum gezielten Abschwächen der Echopulse (30), so dass diese mit den Referenzpulsen (36) größenmäßig vergleichbar sind.

16. Vorrichtung nach einem der Ansprüche 13 bis 15,
**dadurch gekennzeichnet,**
**dass** die Feininterpolatoren (66, 67, 68, 69) jeweils einen TAC und einen ADC aufweisen.

17. Vorrichtung nach einem der Ansprüche 13 bis 16,
**dadurch gekennzeichnet,**
**dass** der TAC ein RC-Glied ist.

18. Vorrichtung nach einem der Ansprüche 13 bis 17,
**dadurch gekennzeichnet,**
**dass** insgesamt vier Feininterpolatoren (66, 67, 68, 69) vorhanden sind.

## Claims

1. Method for the optoelectronic contactless range measurement according to the transit time principle,
in which a distance of an object (14) from a sensor unit (10) is determined from a time difference between a starting signal (L3) and an echo signal (L5), which is derived from an optical measurement pulse (15) reflected by the object (14), wherein for determining the time difference the following steps are performed:
a) by comparing the starting signal (L3) and echo signal (L5) with a digital clock (80) a digital raw value (S10) is obtained,
b) with the aid of at least two fine interpolators (66, 67, 68, 69) an initial time difference between the starting signal (L3) and the beginning of the digital raw value (S10) as well as a final time difference between the echo signal and the end of the digital raw value (S10) is determined,
c) the fine interpolators (66, 67, 68, 69) are in each case supplied with analog signals corresponding to the initial time difference or final time difference, respectively, and are converted to a digital initial time difference or digital final time difference, respectively,
**characterized in that**
for the automatic calibration of the fine interpolators (66, 67, 68, 69) a plurality of measurements of the time difference between a starting signal (L3) and an echo signal (L5) are carried out according to steps a) to c), where the time intervals to be measured have no phase correlation with the digital clock and
where, assuming an equal distribution for the probability with which the values in a given value interval for the initial time difference and final time difference are measured, corrections are calculated for nonlinearities and/or drifts of the characteristics of the fine interpolators (66, 67, 68, 69).

2. Method according to claim 1,
**characterized in that**
a reference distance is measured, **in that** the reference pulses (36) are conducted over an optical reference distance.

3. Method according to claim 2,
**characterized in that**
the reference pulses (36) are detected with the same detector (20) as the echo pulses (30).

4. Method according to one of the claims 1 to 3,
**characterized in that**
pulse widths of the starting signals (L3), echo signals (L5) and/or reference signals (L5) are compensated.

5. Method according to one of the claims 1 to 4,
**characterized in that**
for correcting the fine interpolator values (FI) a sum (S) of the frequencies (H) with which the individual fine interpolator values (FI) occur is formed and
that corrected fine interpolators (FI') are obtained, **in that** the sum (S) is divided by a constant.

6. Method according to one of the claims 1 to 5,
**characterized in that**
in all four fine interpolators (66, 67, 68, 69) are used.

7. Method according to one of the claims 1 to 6,
**characterized in that**
for the determination of the digital raw value (S10) counting only starts as from a second edge of the clock (80) following a starting event.

8. Method according to one of the claims 1 to 7,
**characterized in that**
the starting signal (L3) is derived from a control electronics of a light source (12) of the sensor unit.

9. Method according to one of the claims 1 to 8,
**characterized in that**
prior to starting up an actual measurement operation, tables are recorded for compensation of the fine interpolators (66, 67, 68, 69) and/or for pulse compensation.

10. Method according to one of the claims 1 to 9,
**characterized in that**
during the measurement operation a table for the compensation of the fine interpolators (66, 67, 68, 69) is continuously tracked.

11. Method according to one of the claims 1 to 10,
**characterized in that**
moving averaging is performed for the measured values.

12. Method according to one of the claims 5 to 11,
**characterized in that**
the division by the constant takes place by rejecting a given number of "least significant bits".

13. Apparatus for the optoelectronic contactless range measurement according to the transit time principle, particularly for performing the method according to one of the claims 1 to 12,
having a sensor unit (10) with at least one light source (12) for emitting light pulses (13) and a detector (20) for detecting light pulses (13), it being possible to determine a distance of an object (14) from the sensor unit (10) from a time difference between a starting signal (L3) and an echo signal (L5) derived from an optical measurement pulse (15) reflected by the object (14), and
having a time measuring device (40) for determining the time difference, the time measuring device (40) having the following components:
a digital clock (80) for determining a digital raw value (S10) from the starting signal (L3) and echo signal (L5),
at least two fine interpolators (66, 67, 68, 69) for determining an initial time difference between starting signal (L3) and the beginning of the digital raw value (S10) and a final time difference between the echo signal (L5) and the end of the digital raw value (S10) by converting analog signals corresponding to the initial time difference or final time difference, respectively, into a digital initial time difference or digital final time difference, respectively,
**characterized in that**
for the automatic calibration of the fine interpolators (66, 67, 68, 69) a computing unit (70) is provided which, on the basis of a plurality of measurements of the time difference between a starting signal (L3) and an echo signal (L5) derived from an optical measurement pulse (15) reflected by the object (14), performs a statistical evaluation, the time intervals to be measured having no phase correlation with the digital clock and
where the computing unit (70), assuming an equal distribution for the probability with which values are measured in a given value interval for the initial time difference and final time difference, calculates corrections for nonlinearities and/or drifts of the fine interpolators (66, 67, 68, 69).

14. Apparatus according to claim 13,
**characterized in that**
a device (48) is provided for dividing up the light pulses (13) in each case into a measurement pulse (15) and a reference pulse (36) and,
that a measurement optics (18, 22) is provided for conducting the measurement pulses (15) onto the object (14) and for conducting the measurement pulses (15) reflected by the object (14) in the form of echo pulses (30) onto the detector (20),
that a reference optics (27) is provided for conducting the reference pulses (36) in the direction of detector (20), an optical path of the reference pulses (36) being longer or shorter by at least one offset distance than an optical path of the measurement pulses (15) and
that the detector (20) is used for alternating quantitative detection of both the echo pulses (30) and reference pulses (36).

15. Apparatus according to claim 14,
**characterized in that**
the optical path of the echo pulses (30) contains a controllable pulse attenuator (50) for the targeted attenuation of the echo pulses (30), so that they are dimensionally comparable with the reference pulses (36).

16. Apparatus according to one of the claims 13 to 15,
**characterized in that**
the fine interpolators (66, 67, 68, 69) in each case have a TAC and an ADC.

17. Apparatus according to one of the claims 13 to 16,
**characterized in that**
the TAC is a RC-element.

18. Apparatus according to one of the claims 13 to 17,
**characterized in that**
in all there are four interpolators (66, 67, 68, 69).

## Revendications

1. Procédé de mesure optoélectronique sans contact d'une distance selon le principe du temps de parcours,
dans lequel une distance d'un objet (14) par rapport à une unité de capteur (10) est déterminée à partir d'une différence de temps entre un signal de départ (L3) et un signal d'écho (L5), qui est tiré d'une impulsion (15) de mesure optique réfléchie par l'objet (14), les étapes suivantes étant réalisées pour déterminer la différence de temps :
(a) par comparaison entre le signal de départ (L3) et le signal d'écho (L5) avec une horloge numérique (80), on obtient une valeur brute numérique (S10),
(b) à l'aide d'au moins deux interpolateurs fins (66, 67, 68, 69), on détermine une différence de temps initial entre le signal de départ (L3) et le début de la valeur brute numérique (S10) ainsi qu'une différence de temps final entre le signal d'écho et la fin de la valeur brute numérique (S10),
(c) on introduit dans les interpolateurs fins (66, 67, 68, 69) à chaque fois des signaux analogiques correspondant respectivement à la différence de temps initial ou à la différence de temps final et on les convertit respectivement en une différence de temps initial numérique ou une différence de temps final numérique,
**caractérisé en ce que**
pour le calibrage automatique des interpolateurs fins (66, 67, 68, 69), une pluralité de mesures de la différence de temps entre un signal de départ (L3) et un signal d'écho (L5) sont effectuées après les étapes (a) à (c), les intervalles de temps à mesurer ne présentant pas de corrélation de phase avec l'horloge numérique, et
dans lequel, en supposant une répartition homogène de la probabilité de mesurer les valeurs dans un intervalle de valeurs données pour la différence de temps initial et la différence de temps final, des corrections sont calculées pour des non-linéarités et/ou des dérives des caractéristiques des interpolateurs fins (66, 67, 68, 69).

2. Procédé selon la revendication 1,
**caractérisé en ce qu'**
une distance de référence est mesurée, en envoyant des impulsions de référence (36) sur un trajet optique de référence.

3. Procédé selon la revendication 2,
**caractérisé en ce que**
les impulsions de référence (36) sont détectées avec le même détecteur (20) que les impulsions d'écho (30).

4. Procédé selon l'une quelconque des revendications 1 à 3,
**caractérisé en ce que**
les largeurs d'impulsion des signaux de départ (L3), des signaux d'écho (L5) et/ou des signaux de référence (L5) sont compensées.

5. Procédé selon l'une quelconque des revendications 1 à 4,
**caractérisé**
**en ce que**, pour corriger les valeurs (FI) des interpolateurs fins, on forme une somme (S) des fréquences (H) auxquelles apparaissent les différentes valeurs (FI) d'interpolateurs fins, et
**en ce que** des valeurs d'interpolateurs fins corrigées (FI') sont obtenues en divisant la somme (S) par une constante.

6. Procédé selon l'une quelconque des revendications 1 à 5,
**caractérisé en ce que**
l'on utilise au total quatre interpolateurs fins (66, 67, 68, 69).

7. Procédé selon l'une quelconque des revendications 1 à 6,
**caractérisé en ce que,**
pour déterminer la valeur numérique brute (S10), on ne compte qu'à partir d'un deuxième flanc de l'horloge (80) faisant suite à un événement déclencheur.

8. Procédé selon l'une quelconque des revendications 1 à 7,
**caractérisé en ce que**
le signal de départ (L3) est extrait d'une électronique de commande d'une source lumineuse (12) de l'unité de capteur.

9. Procédé selon l'une quelconque des revendications 1 à 8,
**caractérisé en ce qu'**
avant de lancer un mode de mesure proprement dit, on enregistre des tables de compensation des interpolateurs fins (66, 67, 68, 69) et/ou de compensation des impulsions.

10. Procédé selon l'une quelconque des revendications 1 à 9,
**caractérisé en ce que,**
pendant le mode de mesure, une table de compensation des interpolateurs fins (66, 67, 68, 69) est suivie de manière continue.

11. Procédé selon l'une quelconque des revendications 1 à 10,
**caractérisé en ce qu'**
une formation de moyenne flottante est effectuée pour les valeurs de mesure.

12. Procédé selon l'une quelconque des revendications 5 à 11,
**caractérisé en ce que**
la division par la constante s'effectue par suppression d'un certain nombre de "bits les moins significatifs".

13. Dispositif de mesure optoélectronique sans contact d'une distance selon le principe du temps de parcours, en particulier pour appliquer le procédé selon l'une quelconque des revendications 1 à 12,
avec une unité de capteur (10) avec au moins une source lumineuse (12) pour envoyer des impulsions lumineuses (13), et un détecteur (20) pour détecter des impulsions lumineuses (13), dans lequel une distance d'un objet (14) peut être déterminée par l'unité de capteur (10) à partir d'une différence de temps entre un signal de départ (L3) et un signal d'écho (L5), qui est tiré d'une impulsion de mesure optique (15) réfléchie par l'objet (14), et
avec un dispositif (40) de mesure de temps pour déterminer la différence de temps, qui comprend les composants suivants:
une horloge numérique (80) pour déterminer une valeur brute numérique (S10) à partir du signal de départ (L3) et du signal d'écho (L5),
au moins deux interpolateurs fins (66, 67, 68, 69) pour déterminer une différence de temps initial entre le signal de départ (L3) et le début de la valeur brute numérique (S10) et une différence de temps final entre le signal d'écho (L5) et la fin de la valeur brute numérique (S10) par conversion de signaux correspondant à la différence de temps initial ou à la différence de temps final respectivement en une différence de temps initial numérique ou en une différence de temps final numérique,
**caractérisé**
**en ce que**, pour le calibrage automatique des interpolateurs fins (66, 67, 68, 69) se trouve une unité de calcul (70) qui, sur la base d'une pluralité de mesures de différence de temps entre un signal de départ (L3) et un signal d'écho (L5), qui sont tirés d'une impulsion (15) de mesure optique réfléchie par l'objet (14), procède à une analyse statistique, les intervalles de temps à mesurer ne présentant pas de corrélation de phase avec l'horloge numérique, et
l'unité de calcul (70), en supposant une distribution homogène de la probabilité avec laquelle des valeurs sont mesurées dans un intervalle de valeurs donné pour la différence de temps initial et la différence de temps final, calcule des corrections pour des non-linéarités et/ou des dérives des interpolateurs fins (66, 67, 68, 69).

14. Dispositif selon la revendication 13,
**caractérisé**
**en ce qu'**un dispositif (48) est présent pour diviser les impulsions lumineuses (13) à chaque fois en une impulsion de mesure (15) et une impulsion de référence (36), et
**en ce qu**'une optique de mesure (18, 22) est prévue pour envoyer les impulsions (15) de mesure sur l'objet (14) et pour envoyer des impulsions (15) de mesure réfléchies par l'objet (14) sur le détecteur (20) en tant qu'impulsions d'écho (30),
**en ce qu**'une optique de référence (27) est prévue pour envoyer les impulsions de référence (36) en direction du détecteur (20), un chemin optique des impulsions de référence (36) étant plus court ou plus long d'au moins une distance de décalage par rapport à un chemin optique des impulsions (15) de mesure, et
**en ce que** le détecteur (20) sert à la détermination quantitative alternée des impulsions d'écho (30) et des impulsions de référence (36).

15. Dispositif selon la revendication 14,
**caractérisé en ce que,**
sur le chemin de rayon des impulsions d'écho (30), est placé un atténuateur d'impulsions commandable (50) pour atténuer de manière ciblée les impulsions d'écho (30), de façon que celles-ci puissent être comparées aux impulsions de référence (36) en termes de taille.

16. Dispositif selon l'une quelconque des revendications 13 à 15,
**caractérisé en ce que**
les interpolateurs fins (66, 67, 68, 69) comprennent chacun un TAC et un ADC.

17. Dispositif selon l'une quelconque des revendications 13 à 16,
**caractérisé en ce que**
le TAC est un élément RC.

18. Dispositif selon l'une quelconque des revendications 13 à 17,
**caractérisé en ce que**
quatre interpolateurs fins (66, 67, 68, 69) sont prévus au total.
